# EUROPEAN PATENT SPECIFICATION

(11) **EP 3 650 721 B1**
(45) Date of publication and mention of the grant of the patent: **25.08.2021**
(21) Application number: 19207194.2
(22) Date of filing: 05.11.2019
(51) Int. Cl.: F16C 27/04

(54) **CENTERING SPRING FOR GAS TURBINE ENGINE BEARING COMPARTMENT**
ZENTRIERFEDER FÜR EINEN GASTURBINENMOTORLAGERRAUM
RESSORT DE CENTRAGE POUR COMPARTIMENT DE PALIER DE MOTEUR À TURBINE À GAZ

(30) Priority: 07.11.2018 US 201816182747
(43) Date of publication of application: 13.05.2020
(73) Proprietor: Raytheon Technologies Corporation, Farmington, CT 06032 (US)
(72) Inventor: ANGLIN, Christopher T., Manchester, CT 06040 (US); VON BERG, Kaleb, Middletown, CT 06457 (US)
(74) Representative: Dehns

(56) References cited:
- EP-A1- 3 260 667
- WO-A2-2015/130370

## Description

### BACKGROUND

The application relates to a bearing compartment for a gas turbine engine and, particularly, a centering spring used in the bearing compartment.

Centering springs are commonly used in gas turbine engines to centrally locate rotor shafts and transmit bearing loads to engine static structure. A typical centering spring, known e.g. from EP 3 260 667 A1, includes first and second rings that are axially spaced apart from one another and interconnected by circumferentially spaced axially extending beams. The bearing is supported by the second ring, and the first ring is mounted to the engine static structure via a tight, interference fit to the engine static structure. A support surface on the first ring providing the interference fit is axially spaced from the beams. Load from the bearing is passed through the beams, which are the flexible portion of the centering spring, to the first ring and into the engine static structure by way of the tight fit. The beams are designed to provide a desired stiffness and fatigue life capability for the centering spring.

### SUMMARY

In accordance with a first aspect of the present invention, a bearing compartment for a gas turbine engine includes an engine static structure. A rotating structure is configured to rotate about an axis relative to the engine static structure. A bearing supports the rotating structure. A centering spring has first and second rings interconnected by axially extending circumferentially spaced beams. An aperture is provided between an adjacent pair of the beams. The first ring is mounted to the engine static structure. The bearing is mounted to the second ring. The first ring includes multiple circumferentially spaced lugs. Each of the lugs axially extend into a corresponding one of the apertures. The lugs include a support surface that engages the engine static structure.

In an embodiment of the above, the beam has a first radius at the first ring. The lug has a second radius at the support surface. The second radius is greater than the first radius.

In a further embodiment of any of the above, the beam is tapered and includes first and second portions respectively joined to the first and second rings. A center portion interconnects the first and second portions.

In a further embodiment of any of the above, the first ring includes a hoop that is arranged radially inward of the lugs and joined thereto by radially extending lug pedestals.

In a further embodiment of any of the above, the second ring provides a bearing support surface that is supported by radially extending circumferentially spaced bearing pedestals. The bearing is mounted to the bearing support surface.

In a further embodiment of any of the above, the second ring includes a sealing surface having at least one groove. A seal is provided in the groove. The seal engages the engine static structure.

In a further embodiment of any of the above, the first ring includes a radially extending flange that abuts a shoulder that is provided on the engine static structure. A fastener secures the flange to the engine static structure.

In a further embodiment of any of the above, the fastener is a nut secured, via threads, to the engine static structure and in abutment with the flange.

In a further embodiment of any of the above, the flange includes circumferentially spaced apart holes that receive bolts that fasten the flange to the engine static structure.

In a further embodiment of any of the above, the bearing includes inner and outer races. Rolling elements are circumferentially retained with respect to one another and are arranged between the inner and outer races.

In a further embodiment of any of the above, the outer race is discrete from the second ring.

In a further embodiment of any of the above, the axis is an engine axis. The rotating structure is a shaft that operatively supports at least one of a turbine section and a compressor section for rotation about the axis.

In accordance with a second aspect of the present invention, a centering spring for transferring a load from a bearing to an engine static structure, the centering spring includes first and second rings interconnected by axially extending circumferentially spaced beams. An aperture is provided between an adjacent pair of the beams. The first ring is configured to be mounted to the engine static structure. The second ring is configured to support the bearing. The first ring includes multiple circumferentially spaced lugs. Each of the lugs axially extend into a corresponding one of the apertures. The lugs include a support surface that is configured to engage the engine static structure.

In an embodiment of the above, the beam has a first radius at the first ring. The lug has a second radius at the support surface. The second radius is greater than the first radius.

In a further embodiment of any of the above, the beam is tapered and includes first and second portions respectively joined to the first and second rings. A center portion interconnects the first and second portions.

In a further embodiment of any of the above, the first ring includes a hoop that is arranged radially inward of the lugs and joined thereto by radially extending lug pedestals.

In a further embodiment of any of the above, the first ring includes a radially extending flange. The flange is configured to abut the engine static structure.

In a further embodiment of any of the above, the flange includes circumferentially spaced apart holes that are configured to receive bolts that fasten the flange to the engine static structure.

In a further embodiment of any of the above, the second ring provides a bearing support surface that is supported by radially extending circumferentially spaced bearing pedestals. The bearing support surface is configured to support the bearing.

In a further embodiment of any of the above, the second ring includes a sealing surface having at least one groove. A seal is provided in the groove. The seal is configured to engage the engine static structure.

### BRIEF DESCRIPTION OF THE DRAWINGS

Figure 1 is a schematic cross-sectional view of an example gas turbine engine.
Figure 2 is a schematic view of a bearing compartment shown in Figure 1.
Figure 3 is a cross-sectional view through a bearing compartment.
Figure 4 is a perspective view of an example centering spring used in the bearing compartment.
Figure 5A is a cross-sectional view of the centering spring shown in Figure 4 taken along line 5a-5a.
Figure 5B is a cross-sectional view of the centering spring shown in Figure 4 taken along line 5b-5b.
Figure 5C is a partial view of the centering spring as illustrated in Figure 5B.
Figure 6 is a schematic view of another example bearing compartment using another example centering spring configuration.

These and other features may be best understood from the following drawings and specification.

### DETAILED DESCRIPTION

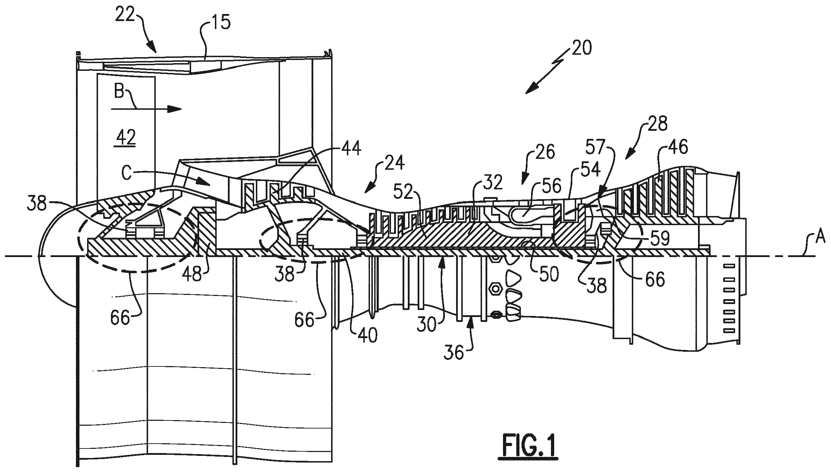

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes. Although depicted as a geared architecture turbofan gas turbine engine in the disclosed non-limiting embodiment, it should be understood that the concepts described herein are not limited to use with geared architecture turbofans as the teachings may be applied to other types of turbine engines including non-geared architecture two-spool and three-spool architectures.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive geared architecture 48 may be varied. For example, geared architecture 48 may be located aft of the low pressure compressor, or aft of the combustor section 26 or even aft of turbine section 28, and fan 42 may be positioned forward or aft of the location of geared architecture 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

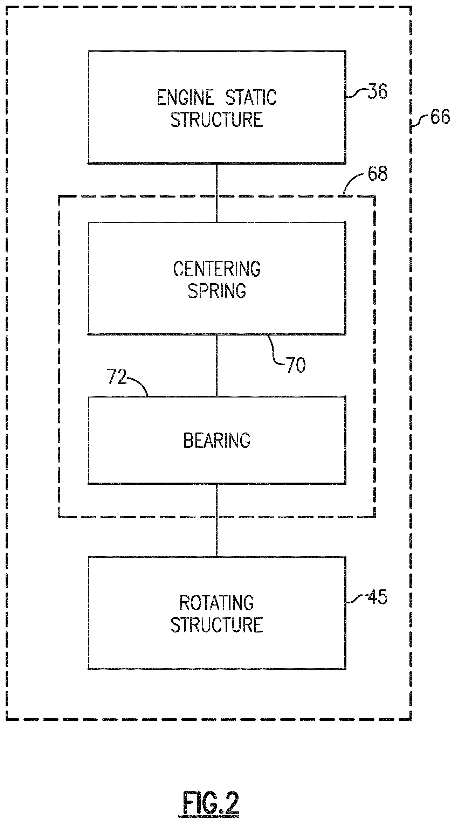

The engine 20 has numerous bearing compartments 66 having a variety of configurations depending upon the location and application within the engine 20, as shown in Figure 1. A schematic illustration of one type of bearing compartment 66 is shown in Figure 2. The bearing compartment 66 includes a rotating structure 45 supported for rotation about the axis A via a bearing 72 (e.g., bearing system 38, with momentary reference to Figure 1) that is supported with respect to the engine static structure 36 via a centering spring 70. The centering spring 70 and bearing 72 provide a bearing support assembly 68. The rotating structure may be, for example, the inner shaft 40 or the outer shaft 50 of Figure 1. The bearing 72 may be any suitable configuration, such as a ball bearing, tapered roller bearing, kneel bearing, or any other suitable configuration for the application. The centering spring 70 is designed to provide a desired stiffness and fatigue life, while permitting some flexibility when transmitting load from the rotating structure 45 through the bearing 72 to the engine static structure 36.

Some bearing compartments 66 have limited axial space within which to fit hardware, such as the centering spring 70. This, in turn, limits the overall length of the centering spring, making it difficult to achieve desired packaging, desired deflection, and structural criteria relating to fatigue life requirements. To this end, the disclosed centering spring 70 provides an arrangement in which the overall centering spring length may be reduced, if desired.

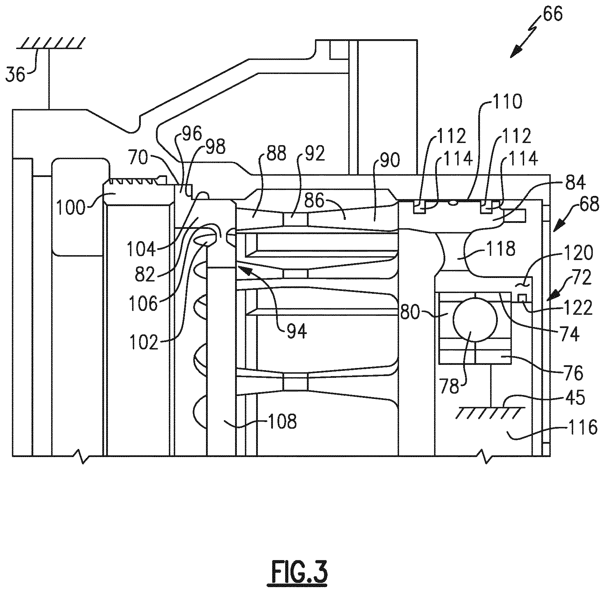

Referring to Figure 3, the centering spring 70 includes first and second rings 82, 84 respectively, that are interconnected to one another by axially extending circumferentially spaced beams 86. In the example, the beams 86 are provided by first and second tapered portions 88, 90 joined together by a center portion 92. The size and shape of the beams 86 provide the desired stiffness, flexibility, and fatigue life capability of the centering spring 70.

An aperture 94, or window, is provided between an adjacent pair of the beams 86 such that the apertures 94 are provided circumferentially between the beams 86.

The bearing 72 is mounted to the second ring 84. In the example shown in Figure 3, the bearing 72 includes outer and inner races 74, 76. Rolling elements 78 circumferentially located by a cage 80 are provided between the outer and inner races 74, 76 respectively.

The first ring 82 includes a radially extending flange 96. The flange 96 abuts a shoulder 98 of the engine static structure 36 when installed. The centering spring 70 may be secured to the engine static structure 36 in a variety of manners. In the example shown, a nut 100, or fastener, is used to clamp the flange 96 against the shoulder 98.

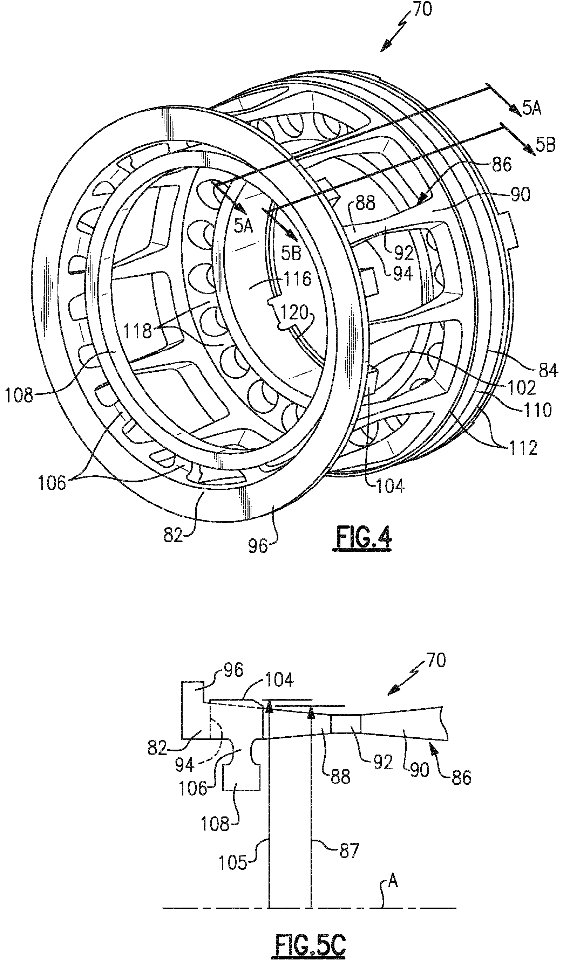

Referring to Figures 3 and 4, the first ring 82 includes multiple circumferentially spaced lugs 102. Each of the lugs 102 axially extends into a corresponding one of the apertures 94. That is, the lugs 102 and the beams 86 are in axially overlapping relationship with one another. In this manner, an overall axially shorter centering spring may be provided, which enables longer beams 86 to be utilized within the same space as compared to a prior art centering spring configuration. This enables additional range in centering spring stiffness and can reduce stress in the beams 86, thereby increasing part life.

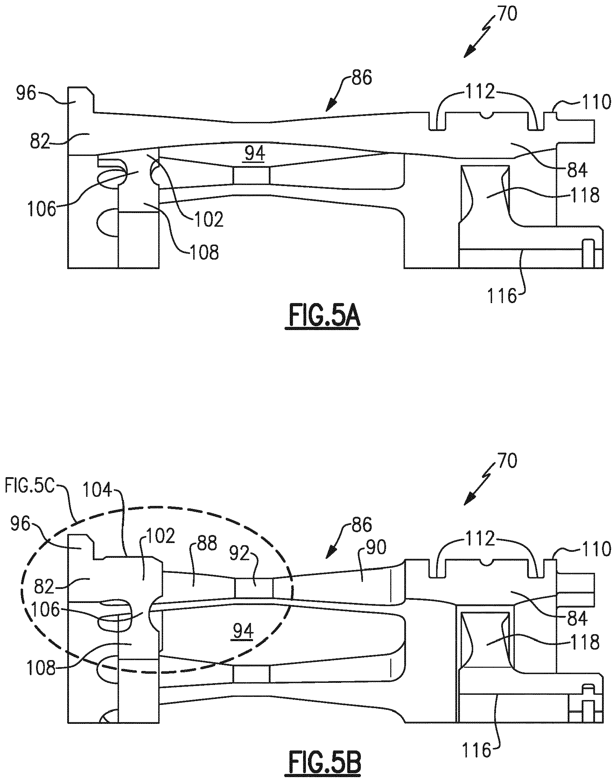

The lugs 102 include a support surface 104 that is arranged at an outer diameter. As shown in Figure 5C, the beams 86 at the first ring 82 include a first radius 87 that is smaller than a second radius 105 provided at the support surface 104, that is, at the intersection of the beam 86 and the first ring 82. That is, the support surface 104 is radially proud of the beams 86. This support surface 104 engages the engine static structure 36 in a tight fit, interference relationship.

To provide stiffness to the lugs 102, a full hoop 108 is arranged radially inwardly of the lugs 102 to prevent the lugs 102 from bending. Lug pedestals 106 are circumferentially spaced apart from one another and radially interconnect the lugs 102 to the hoop 108. It should be noted full hoop 108 is not necessarily required provided lugs 102 are stiff enough to endure the various engine load and dynamic scenarios to which they are subject.

In the example illustrated in Figures 3 and 4, the second ring 84 provides a sealing surface 110 with respect to the adjacent engine static structure 36. Axially spaced apart grooves 112 are provided in the sealing surface 110 and receive a seal 114, such as a piston ring. The space provided between the seals 114 provides an oil damper between the second ring 84 and the engine static structure 36. It should be noted it is not necessary to have sealing surface 110 and the associated seals 114 present in the second ring 84, yet damper oil may still be provided to the radial space between the engine static structure 36 and the second ring 84. It is also possible to not have sealing surface 110 and the associated seals 114 present in the second ring 84 and have no damper oil delivered to the radial space between the engine static structure 36 and the second ring 84.

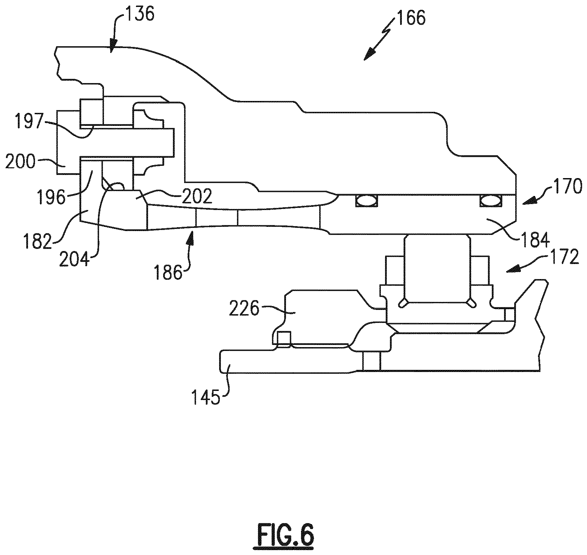

A bearing support surface 116 is provided by the second ring. As shown in Figures 3 and 4, this bearing support surface 116 may be radially spaced inward from the sealing surface 110 and supported by radially extending, circumferentially spaced apart bearing pedestals 118. A notch 120 may be provided on the bearing support surface 116 to receive a retaining clip 122 that axially locates the bearing 72. Another bearing compartment 166 is illustrated in Figure 6. This bearing compartment 166 includes a centering spring 170 with a flange 196 having circumferentially spaced holes 197 and configured to receive fasteners (such as bolts) 200 to secure the centering spring 170 to the engine static structure 136.

The first ring 182 includes the support surface 204 that engages the engine static structure. The lugs 202 axially extend into the aperture 194 such that they are in axially overlapping relationship with the beams 186.

The second ring 184 supports the bearing 172, which is axially retained with respect to the rotating structure 145 by a nut 226.

Although an embodiment of this invention has been disclosed, a worker of ordinary skill in this art would recognize that certain modifications would come within the scope of this disclosure. For that reason, the invention is defined by the appended claims.

## Claims

1. A centering spring (70, 170) for transferring a load from a bearing (72, 172) to an engine static structure (36, 136), the centering spring (70, 170) comprising:
first and second rings (82, 182, 84, 184) interconnected by axially extending circumferentially spaced beams (86, 186), an aperture (94, 194) provided between an adjacent pair of the beams (86, 186), **characterising in that** the first ring (82, 182) is configured to be mounted to the engine static structure (36, 136), the second ring (84, 184) is configured to support the bearing (72, 172), the first ring (82, 182) includes multiple circumferentially spaced lugs (102, 202), each of the lugs (102, 202) axially extends into a corresponding one of the apertures (94, 194), the lugs (102, 202) include a support surface (104, 204) configured to engage the engine static structure (36, 136).

2. The centering spring of claim 1, wherein the beam (86, 186) has a first radius (87) at the first ring (82, 182), and the lug (102, 202) has a second radius (105) at the support surface (104, 204), the second radius (105) greater than the first radius (87).

3. The centering spring of claim 1 or 2, wherein the beam (86, 186) is tapered and includes first and second portions (88, 90) respectively joined to the first and second rings (82, 182, 84, 184), and a center portion (92) interconnecting the first and second portions (88, 90).

4. The centering spring of any of claims 1 to 3, wherein the first ring (82, 182) includes a hoop (108) arranged radially inward of the lugs (102, 202) and joined thereto by radially extending lug pedestals (106).

5. The centering spring of any preceding claim, wherein the second ring (84, 184) provides a bearing support surface (104, 204) supported by radially extending circumferentially spaced bearing pedestals (118), the bearing support surface (104, 204) configured to support the bearing (72, 172).

6. The centering spring of any preceding claim, wherein the second ring (84, 184) includes a sealing surface (110) having at least one groove (112), and a seal (114) is provided in the groove (112), the seal (114) configured to engage the engine static structure (36, 136).

7. The centering spring of any preceding claim, wherein the first ring (82, 182) includes a radially extending flange (96, 196) configured to abut the engine static structure (36, 136).

8. The centering spring of any preceding claim, wherein the flange (96, 196) includes circumferentially spaced apart holes (197) configured to receive bolts (200) fastening the flange (96, 196) to the engine static structure (36, 136).

9. A bearing compartment (66, 166) for a gas turbine engine (20) comprising:
an engine static structure (36, 136);
a rotating structure (45, 145) configured to rotate about an axis (A) relative to the engine static structure (36, 136);
a bearing (72, 172) supporting the rotating structure (45, 145); and
a centering spring (70, 170) according to any of claims 1 to 6, wherein the first ring (82, 182) is mounted to the engine static structure (36, 136), the bearing (72, 172) is mounted to the second ring (84, 184), and the support surface (104, 204) engages the engine static structure (36, 136).

10. The bearing compartment of claim 9, wherein the first ring (82, 182) includes a radially extending flange (96, 196) abutting a shoulder (98) provided on the engine static structure (36, 136), and a fastener secures the flange (96, 196) to the engine static structure (36, 136).

11. The bearing compartment of claim 10, wherein the fastener is a nut (100) secured, via threads, to the engine static structure (36, 136) and in abutment with the flange (96, 196).

12. The bearing compartment of claim 10, wherein the flange (96, 196) includes circumferentially spaced apart holes (197) receiving bolts (200) fastening the flange (96, 196) to the engine static structure (36, 136).

13. The bearing compartment of any of claims 9 to 12, wherein the bearing (72, 172) includes inner and outer races (76, 74), and rolling elements (78) are circumferentially retained with respect to one another and arranged between the inner and outer races (76, 74).

14. The bearing compartment of claim 13, wherein the outer race (74) is discrete from the second ring (84, 184).

15. The bearing compartment of any of claims 9 to 14, wherein the axis (A) is an engine axis (A), and the rotating structure (45, 145) is a shaft operatively supporting at least one of a turbine section (28) and a compressor section (24) for rotation about the axis (A).

## Patentansprüche

1. Zentrierfeder (70, 170) zum Übertragen einer Last von einem Lager (72, 172) auf eine feststehende Triebwerkstruktur (36, 136), wobei die Zentrierfeder (70, 170) Folgendes umfasst:
einen ersten und einen zweiten Ring (82, 182, 84, 184), die durch axial verlaufende, in Umfangsrichtung beabstandete Balken (86, 186) miteinander verbunden sind, wobei eine Öffnung (94, 194) zwischen einem angrenzenden Paar der Balken (86, 186) bereitgestellt ist, **dadurch gekennzeichnet, dass** der erste Ring (82, 182) so konfiguriert ist, dass er an der feststehenden Triebwerkstruktur (36, 136) angebracht ist, der zweite Ring (84, 184) so konfiguriert ist, dass er das Lager (72, 172) stützt, der erste Ring (82, 182) vielfache in Umfangsrichtung beabstandete Ansätze (102, 202) beinhaltet, wobei sich jeder der Ansätze (102, 202) axial in eine entsprechende der Öffnungen (94, 194) erstreckt, wobei die Ansätze (102, 202) eine Stützfläche (104, 204) beinhalten, die so konfiguriert ist, dass sie die feststehende Triebwerksstruktur (36, 136) in Eingriff nimmt.

2. Zentrierfeder nach Anspruch 1, wobei der Balken (86, 186) einen ersten Radius (87) an dem ersten Ring (82, 182) aufweist und der Ansatz (102, 202) einen zweiten Radius (105) an der Stützfläche (104, 204) aufweist, wobei der zweite Radius (105) größer als der erste Radius (87) ist.

3. Zentrierfeder nach Anspruch 1 oder 2, wobei der Balken (86, 186) kegelförmig ist und einen ersten und einen zweiten Abschnitt (88, 90), die jeweils mit dem ersten und dem zweiten Ring (82, 182, 84, 184) verbunden sind, und einen mittleren Abschnitt (92), der den ersten und den zweiten Abschnitt (88, 90) miteinander verbindet, beinhaltet.

4. Zentrierfeder nach einem der Ansprüche 1 bis 3, wobei der erste Ring (82, 182) einen Reifen (108) beinhaltet, der radial einwärts der Ansätze (102, 202) angeordnet ist und mit diesen durch radial verlaufende Ansatzsockel (106) verbunden ist.

5. Zentrierfeder nach einem der vorstehenden Ansprüche, wobei der zweite Ring (84, 184) eine Lagerstützfläche (104, 204) bereitstellt, die durch radial verlaufende, in Umfangsrichtung beabstandete Lagersockel (118) gestützt wird, wobei die Lagerstützfläche (104, 204) so konfiguriert ist, dass sie das Lager (72, 172) stützt.

6. Zentrierfeder nach einem der vorstehenden Ansprüche, wobei der zweite Ring (84, 184) eine Dichtungsfläche (110) beinhaltet, die mindestens eine Rille (112) aufweist, und wobei eine Dichtung (114) in der Rille (112) bereitgestellt ist, wobei die Dichtung (114) so konfiguriert ist, dass sie die feststehende Triebwerksstruktur (36, 136) in Eingriff nimmt.

7. Zentrierfeder nach einem der vorstehenden Ansprüche, wobei der erste Ring (82, 182) einen radial verlaufenden Flansch (96, 196) beinhaltet, der so konfiguriert ist, dass er an die feststehende Triebwerksstruktur (36, 136) angrenzt.

8. Zentrierfeder nach einem der vorstehenden Ansprüche, wobei der Flansch (96, 196) in Umfangsrichtung voneinander beabstandete Löcher (197) beinhaltet, die so konfiguriert sind, dass sie Bolzen (200) aufnehmen, die den Flansch (96, 196) an der feststehenden Triebwerkstruktur (36, 136) befestigen.

9. Lagerkammer (66, 166) für ein Gasturbinentriebwerk (20), umfassend:
eine feststehende Triebwerkstruktur (36, 136);
eine rotierende Struktur (45, 145), die so konfiguriert ist, dass sie um eine Achse (A) relativ zur feststehenden Triebwerkstruktur (36, 136) rotiert;
ein Lager (72, 172), das die rotierende Struktur (45, 145) stützt; und
eine Zentrierfeder (70, 170) nach einem der Ansprüche 1 bis 6, wobei der erste Ring (82, 182) an der feststehenden Triebwerkstruktur (36, 136) montiert ist, das Lager (72, 172) an dem zweiten Ring (84, 184) montiert ist und die Stützfläche (104, 204) die feststehende Triebwerkstruktur (36, 136) in Eingriff nimmt.

10. Lagerkammer nach Anspruch 9, wobei der erste Ring (82, 182) einen radial verlaufenden Flansch (96, 196) beinhaltet, der an eine Schulter (98) angrenzt, die an der feststehenden Triebwerksstruktur (36, 136) bereitgestellt ist, und ein Befestigungsmittel den Flansch (96, 196) an der feststehenden Triebwerksstruktur (36, 136) fixiert.

11. Lagerkammer nach Anspruch 10, wobei das Befestigungsmittel eine Mutter (100) ist, die über Gewinde an der feststehenden Triebwerkstruktur (36, 136) und im Anschlag mit dem Flansch (96, 196) fixiert ist.

12. Lagerkammer nach Anspruch 10, wobei der Flansch (96, 196) in Umfangsrichtung voneinander beabstandete Löcher (197) beinhaltet, die Bolzen (200) aufnehmen, die den Flansch (96, 196) an der feststehenden Triebwerkstruktur (36, 136) fixieren.

13. Lagerkammer nach einem der Ansprüche 9 bis 12, wobei das Lager (72, 172) einen inneren und einen äußeren Laufring (76, 74) beinhaltet und Wälzkörper (78) in Umfangsrichtung in Bezug aufeinander gesichert sind und zwischen dem inneren und dem äußeren Laufring (76, 74) angeordnet sind.

14. Lagerkammer nach Anspruch 13, wobei der äußere Laufring (74) von dem zweiten Ring (84, 184) getrennt ist.

15. Lagerkammer nach einem der Ansprüche 9 bis 14, wobei die Achse (A) eine Triebwerksachse (A) ist und die rotierende Struktur (45, 145) eine Welle ist, die wirksam mindestens einen aus einem Turbinenabschnitt (28) und einem Verdichterabschnitt (24) für die Rotation um die Achse (A) stützt.

## Revendications

1. Ressort de centrage (70, 170) pour transférer une charge depuis un palier (72, 172) vers une structure statique de moteur (36, 136), le ressort de centrage (70, 170) comprenant :
des première et seconde bagues (82, 182, 84, 184) interconnectées par des poutrelles (86, 186) espacées circonférentiellement s'étendant axialement, une ouverture (94, 194) prévue entre une paire adjacente des poutrelles (86, 186), **caractérisé en ce que** la première bague (82, 182) est configurée pour être montée sur la structure statique de moteur (36, 136), la seconde bague (84, 184) est configurée pour supporter le palier (72, 172), la première bague (82, 182) comporte de multiples ergots (102, 202) espacés circonférentiellement, chacun des ergots (102, 202) s'étend axialement dans une ouverture correspondante parmi les ouvertures (94, 194), les ergots (102, 202) comportent une surface de support (104, 204) configurée pour venir en prise avec la structure statique de moteur (36, 136).

2. Ressort de centrage selon la revendication 1, dans lequel la poutrelle (86, 186) a un premier rayon (87) au niveau de la première bague (82, 182), et l'ergot (102, 202) a un second rayon (105) au niveau de la surface de support (104, 204), le second rayon (105) étant supérieur au premier rayon (87).

3. Ressort de centrage selon la revendication 1 ou 2, dans lequel la poutrelle (86, 186) est effilée et comporte des première et seconde parties (88, 90) reliées respectivement aux première et second bagues (82, 182, 84, 184), et une partie centrale (92) interconnectant les première et seconde parties (88, 90).

4. Ressort de centrage selon l'une quelconque des revendications 1 à 3, dans lequel la première bague (82, 182) comporte un anneau (108) disposé radialement vers l'intérieur des ergots (102, 202) et relié à ceux-ci par des socles d'ergot (106) s'étendant radialement.

5. Ressort de centrage selon une quelconque revendication précédente, dans lequel la seconde bague (84, 184) prévoit une surface de support (104, 204) de palier supportée par des socles de palier (118) espacés s'étendant circonférentiellement et radialement, la surface de support (104, 204) de palier étant configurée pour supporter le palier (72, 172).

6. Ressort de centrage selon une quelconque revendication précédente, dans lequel la seconde bague (84, 184) comporte une surface d'étanchéité (110) ayant au moins une rainure (112), et un joint (114) est prévu dans la rainure (112), le joint (114) étant configuré pour venir en prise avec la structure statique de moteur (36, 136).

7. Ressort de centrage selon une quelconque revendication précédente, dans lequel la première bague (82, 182) comporte une bride (96, 196) s'étendant radialement configurée pour venir en butée contre la structure statique de moteur (36, 136).

8. Ressort de centrage selon une quelconque revendication précédente, dans lequel la bride (96, 196) comporte des trous (197) espacés circonférentiellement configurés pour recevoir des boulons (200) fixant la bride (96, 196) à la structure statique de moteur (36, 136).

9. Compartiment de palier (66, 166) pour un moteur à turbine à gaz (20) comprenant :
une structure statique de moteur (36, 136) ;
une structure rotative (45, 145) configurée pour tourner autour d'un axe (A) par rapport à la structure statique de moteur (36, 136) ;
un palier (72, 172) supportant la structure rotative (45, 145) ; et
un ressort de centrage (70, 170) selon l'une quelconque des revendications 1 à 6, dans lequel la première bague (82, 182) est montée sur la structure statique de moteur (36, 136), le palier (72, 172) est monté sur la seconde bague (84, 184) et la surface de support (104, 204) vient en prise avec la structure statique de moteur (36, 136).

10. Compartiment de palier selon la revendication 9, dans lequel la première bague (82, 182) comporte une bride (96, 196) s'étendant radialement en butée contre un épaulement (98) prévu sur la structure statique de moteur (36, 136), et un élément de fixation fixe la bride (96, 196) à la structure statique de moteur (36, 136).

11. Compartiment de palier selon la revendication 10, dans lequel l'élément de fixation est un écrou (100) fixé, par l'intermédiaire de filetages, à la structure statique de moteur (36, 136) et en butée avec la bride (96, 196).

12. Compartiment de palier selon la revendication 10, dans lequel la bride (96, 196) comporte des trous (197) espacés circonférentiellement recevant des boulons (200) fixant la bride (96, 196) à la structure statique de moteur (36, 136).

13. Compartiment de palier selon l'une quelconque des revendications 9 à 12, dans lequel le palier (72, 172) comporte des chemins de roulement intérieur et extérieur (76, 74), et des éléments roulants (78) sont retenus circonférentiellement les uns par rapport aux autres et disposés entre les chemins de roulement intérieur et extérieur (76, 74).

14. Compartiment de palier selon la revendication 13, dans lequel le chemin de roulement extérieur (74) est distinct de la seconde bague (84, 184).

15. Compartiment de palier selon l'une quelconque des revendications 9 à 14, dans lequel l'axe (A) est un axe de moteur (A), et la structure rotative (45, 145) est un arbre supportant fonctionnellement au moins l'une d'une section de turbine (28) et d'une section de compresseur (24) pour une rotation autour de l'axe (A).
